# EUROPEAN PATENT APPLICATION

(11) **EP 1 650 346 A1**
(43) Date of publication of application: **26.04.2006**
(21) Application number: 04745781.7
(22) Date of filing: 11.06.2004
(51) Int. Cl.: D06F 95/00, H04M 11/00

(54) **COIN LAUNDRY MANAGEMENT SYSTEM**

(30) Priority: 16.06.2003 JP 2003171310
(71) Applicant: KDM Co., Ltd., Yoshimura-cho, Myazaki-citi, Miyazaki 8800841 (JP)
(72) Inventor: Kodama, Yasutaka c/o KDM Co., Ltd., Miyazaki-city, Miyazaki 8800841 (JP)
(74) Representative: Stachow, Ernst-Walther
(86) International application number: PCT/JP2004/008187
(87) International publication number: WO 2004/111328

(57) **Abstract**

There is provided a coin laundry management system including a coin laundry concentrated control section (3) and a network camera (12) which are arranged in a coin laundry store (2) and a central control device (16) which is arranged at an administrator side (15) and connected to the coin laundry concentrated control section (3) and the network camera (12) via prescribed communication means. The coin laundry concentrated control section (3) is connected to the central control device (16) via the public line network (28). Moreover, the network camera (12) is all the time connected to the central control device (16) by the Internet (27). The administrator side (15) performs remote management of a coin laundry device (4) according to the near real time moving image inside the store (2) displayed on the central control device (16) and the state of the coin laundry device (4). Thus, the present invention provides a coin laundry management system which makes it possible to respond to complaints from a customer rapidly and appropriately, to ensure the security of the store and to realize the outsourcing of the coin laundry management business.

## Description

### BACKGROUND OF THE INVENTION

### 1. Field of the Invention

The present invention relates to a coin laundry management system.

### 2. Description of Related Art

Conventionally, as an example, a control device that performs the drive control, and a data controller that sends data of the control device are provided at a coin laundry store. While a central control device connected to the data controller via a line of communication is provided at an administrator side and the administrator side has a remote control system technique controlling the coin laundry device remotely based on data sent to the central control device from the data controller (ex. Patent Document 1)

In such a technique, however, the store condition is not viewable by the administrator side. It is also impossible to ascertain the exact situation of a problem that may arise in or with a coin laundry device only with the static view displayed on the monitor of the central device so that it causes the need for telephone contact with a customer at the coin laundry store who is encountering a problem. Furthermore, if the customer lacks knowledge about the coin laundry device, it is difficult for that customer to relate exact information about the problem to the administrator side through telephone contact alone, and it is also difficult for the customer to understand direction given by the administrator side about the procedure to solve the problem. Therefore, the administrator side has to send staff to the store where the problem occurs. For this reason, it is difficult to respond to problems rapidly and appropriately (ex. Patent Document 1).

There is a technique to solve this problem. For example, a store side controller that performs the drive control, a store side telephone to contact the administrator side when a problem occurs, and a security camera to monitor the status of the store are provided at the coin laundry store side. While an administrator side telephone connected with a store side telephone via the public telephone network, an administrator side controller connected with a store side controller via the public telephone network and a monitor are provided at the administrator side. When a problem occurs in a coin laundry store, a customer at the store informs the administrator via a telephone in the store. The administrator turns on the security camera that displays images of the inside of the store. Then the administrator gives direction for the solution of the problem to the customer in the store. This technique also allows the administrator to view images of the inside of the store, taken by the security camera, and check dishonest acts in the store (ex. Patent Document 2).

Patent Document 1: Patent Publication No.2962993
Patent Document 2: Patent Publication No.3287555

In the conventional art mentioned above in Patent Document 2, the security camera is connected to the controller at the administrator side via the public telephone network. However, considering that the speed of transfer via the public telephone line network with the then technical level having been the analog line with several tens of Kbps or ISDN, it was difficult to send and receive moving images in near real time. And for this reason, it was impossible to view moving images of the store in near real time from remote locations. The security camera is a fixed appliance without zoom function so that it is impossible to zoom in to the extent that dishonest acts can be identified and recorded. This also makes it difficult to ascertain the exact customer situation and coin laundry device condition. Because of this, as described above in Patent Document 1, it becomes necessary to respond to customer telephone calls and send staff to the store in order to ascertain the exact nature of problems that may arise with the coin laundry device and to effect solutions to such problems. In consequence thereof, it is difficult to respond to problems rapidly and appropriately. There is also a time lag in the receipt of the coin laundry device data sent from the controller at the store, so that it is necessary to interview the customer or send staff to the store in order to ascertain exact and real-time information from when a problem with the coin laundry device arose. Therefore, there is a problem in that it is difficult to respond to problems rapidly and appropriately. The term "to respond to problems" herein means the procedure for solving the problems that the administrator side takes care of when a problem arises with the coin laundry device, regardless of whether or not there is contact between the administrator side and the customer of the coin laundry.

There is also a problem in that it is impossible to record dishonest acts in an area of a store where the security camera cannot take moving images because, as is described above, conventional security cameras can only take moving images of a part of the store. Another problem is that because each moving image of the coin laundry device and customer is small in size, it is difficult to ascertain the situation when the security camera is set to take moving images for the entire store through a wide-angle lens.

Thus, the conventional art does not allow a rapid and appropriate response to complaints from the coin laundry customer. In addition, because the security of the store is uncertain and because of the risks involved in entrusting others (traders) with money collection and cleaning, the conventional art has not facilitated the outsourcing of the coin laundry management business.

### SUMMARY OF THE INVENTION

In the view of the above problems in the conventional art, the present invention has as an object to provide a coin laundry management system which makes it possible to respond to complaints from a customer rapidly and appropriately, to ensure the security of the store and to realize the outsourcing of the coin laundry management business.

In a first aspect of the present invention,
a device includes a coin laundry device,
a control device that controls the operation of the coin laundry device based on coin laundry device data received from various sensors,
a data controller that sends the data from the control device,
a network camera that converts still images to moving image data and sends it,
the coin laundry store where the coin laundry device,
the data controller and the network camera are provided,
and a central control device that is connected to the data controller and the network camera via a line of communication.
The device also controls the coin laundry device remotely based on coin laundry device data and the moving images of the coin laundry store that are sent to the central control device from the data controller and the network camera via a line of communication.

In a second aspect of the present invention,
a device includes a coin laundry concentrated control section which is provided with a coin laundry device,
a control device that controls the operation of the coin laundry device based on the coin laundry device data loaded from various sensors and also stores it,
and a data controller that sends the data from the control device;
and a network camera with zoom, pan and tilt functions that can convert still images of the inside of the store to moving images and send them;
and a coin laundry store which is provided with the coin laundry concentrated control section and the network camera; and a central control device, which is set at the administrator side and has a monitor, connected to the coin laundry concentrated control section and the network camera via a line of communication.
The coin laundry concentrated control section and the central control device are connected via the public telephone line network with an xDSL line,
and the condition of a coin laundry device is displayed on the monitor of the central control device based on the contents of the coin laundry device data which are sent to the central control device.
Furthermore, the network camera and the central control device are constantly connected to the Internet via an xDSL line,
and the administrator side operates the network camera by the central control device and takes images. After these images of the store are converted to moving image data and sent to the homepage server of the administrator side which is constantly connected to the Internet, these moving images are uploaded onto the homepage in near real time and displayed on the monitor of the central control device which is constantly connected to the Internet.
Then, the administrator side operates the coin laundry device remotely based on these near real time moving images of the inside of the store and the condition of the coin laundry device that is displayed on the monitor of the central control device.

In a third aspect of the present invention, a device includes a coin laundry concentrated control section which is provided with a coin laundry device, a control device that controls the operation of the coin laundry device based on coin laundry device data loaded from various sensors and also stores it, and a data controller that sends the data from the control device; and a network camera that can convert the images taken to moving images and send them; and a coin laundry store which is provided with the coin laundry concentrated control section, and the network camera; and a central control device with a monitor set at the administrator side. The central control device, the coin laundry concentrated control section and the network camera are constantly connected to the Internet via a prescribed line of communication, and the condition of a coin laundry device is displayed on the monitor of the central control device based on the contents of the coin laundry device data which is sent to the central control device. The administrator side operates the network camera by the central control device and takes images. After these images of the store are converted to moving image data and sent to the homepage server of the administrator side which is constantly connected to the Internet, these moving images are uploaded onto the homepage in near real time and displayed on the monitor of the central control device which is constantly connected to the Internet. Then, the administrator side operates the coin laundry device remotely based on these near real time moving images of the inside of the store and the condition of the coin laundry device that is displayed on the monitor of the central control device.

In a fourth aspect of the present invention, a coin laundry management system, which is mentioned above in from the first to the third aspect, makes it possible to upload the images that are taken by a network camera as still images onto the homepage and view these still images and the moving images selectively on the homepage.

In a fifth aspect of the present invention, in a coin laundry management system, which is mentioned above in from the first to the third aspect, the images taken by a network camera are recorded by a recording device and the replayed images of these recorded images are uploaded onto the homepage.

xDSL is the generic term for DSL technology (Digital Subscriber Line) that includes HDSL (High-bit-rate Digital Subscriber Line), SDSL (Symmetric Digital Subscriber Line), VDSL (Very high-bit-rate digital Subscriber Line), CDSL (Consumer Digital Subscriber Line) and ADSL (Asymmetric Digital Subscriber Line), which is the most widespread commercial service in Japan that operates high-speed digital data communication by using existing telephone lines (analog lines) consisting of twisted pair wire formed by copper wire. Always-connected Internet service using a fiber-optic network, a communication line network consisting of fiber-optic cables, has also started.

### BRIEF DESCRIPTION OF THE DRAWINGS

Hereinafter, the embodiments of the present invention will be described with the accompanying drawings from Fig.1 to Fig.6. The embodiments of the present invention do not limit the scope of the invention.
Fig.1 shows the network composition that shows the first embodiment of the coin laundry management system of the present invention.
Fig.2 shows the coin laundry concentrated control section of the coin laundry management system of the present invention.
Fig.3 shows the network composition that shows the second embodiment of the coin laundry management system of the present invention.
Fig.4 shows the net work composition that shows the third embodiment of the coin laundry management system of the present invention.
Fig.5 shows the flow chart that shows the procedure for solving problems when problems arise in the coin laundry management system of the present invention.
Fig.6 shows the network composition that shows applications of the coin laundry management system of the present invention.

### DESCRIPTION OF THE PREFFERRED EMBODIMENTS

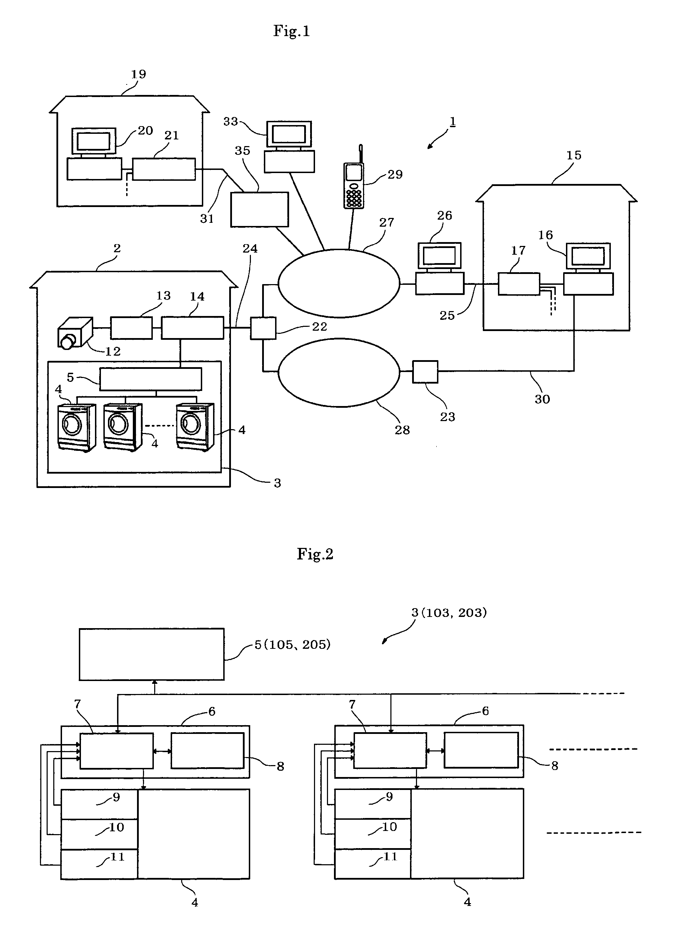

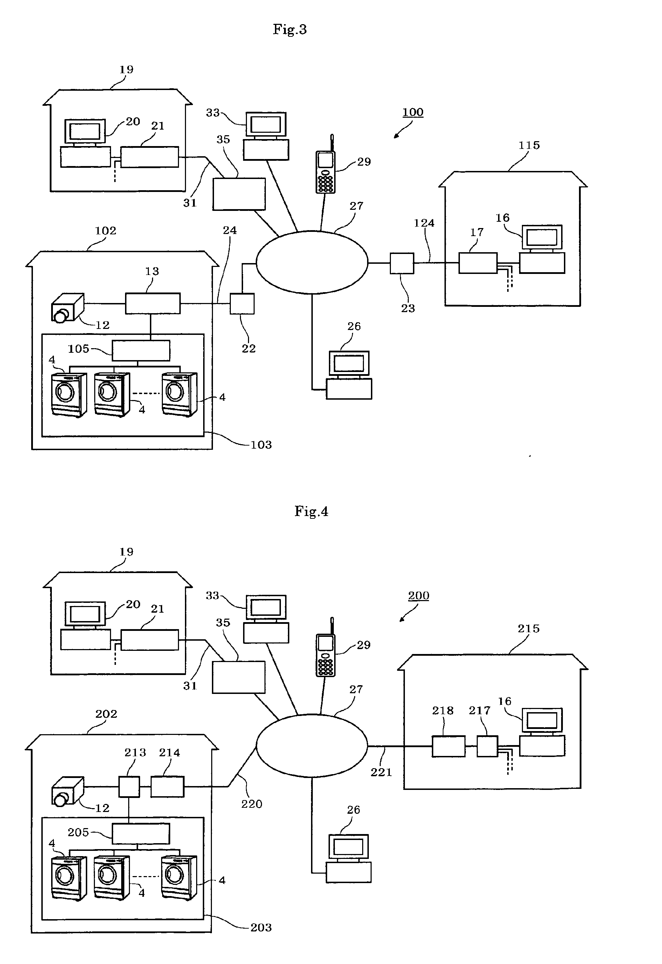

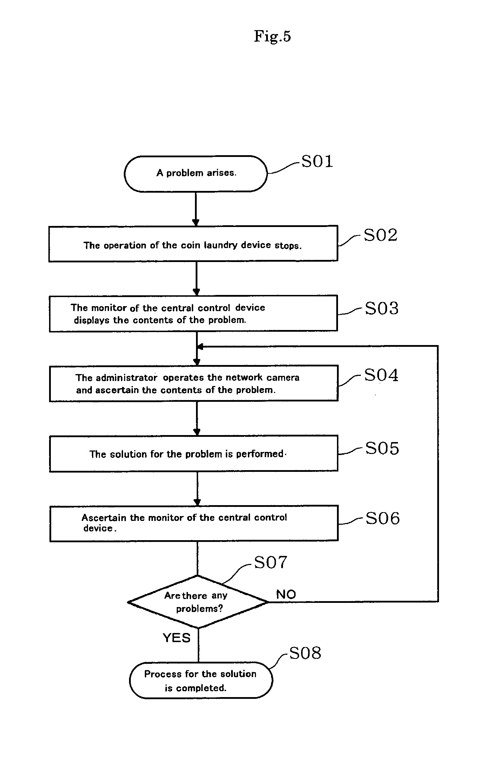

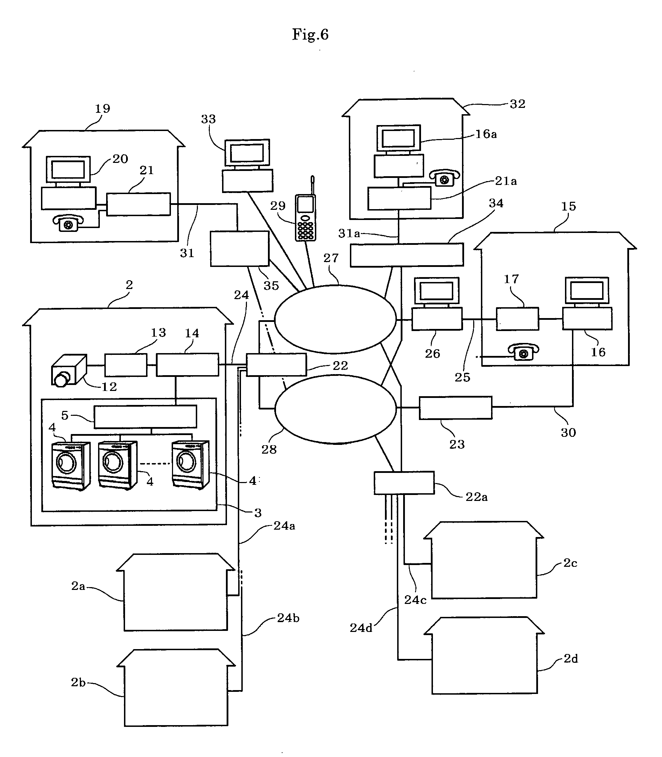

Hereinafter, the mode for carrying out the present invention will be described with the accompanying embodiments shown in the figures. Fig.1 shows the network composition that shows the first embodiment of the coin laundry management system of the present invention. Fig.2 shows the coin laundry concentrated control section of the coin laundry management system of the present invention. Fig.3 shows the network composition that shows the second embodiment of the coin laundry management system of the present invention. Fig.4 shows the net work composition that shows the third embodiment of the coin laundry management system of the present invention. Fig.5 shows the flow chart that shows the procedure for solving problems when problems arise in the coin laundry management system of the present invention. Fig.6 shows the network composition that shows applications of the coin laundry management system of the present invention.

### 1. FIRST EMBODIMENT

The first embodiment of the coin laundry management system of the present invention will be described. The coin laundry management system of the present invention aims to manage the system remotely by using two separate networks simultaneously, which are the Internet and the public telephone line network, where a network between a network camera set at a store and a central control device set at an administrator side, and a network between a coin laundry concentrated control section at a store and a central control device set at an administrator side exist. As shown in Fig. 1, in a coin laundry management system 1 of the present invention, a coin laundry concentrated control section 3 set at a store 2 is connected to a splitter 14, which is connected to a store side station 22 via an ADSL line 24. A store side station 22 is connected to an administrator side station 23 via a public telephone line network 28. The central control device 16 with internal modem at the administrator side 15 and the administrator side station 23 are connected via an analog line 30. In this way, data of the coin laundry device 4 is communicated to the central control device 16 at the administrator side 15 via the public telephone line network 28 without using a leased line so that it reduces correspondence expenses. The public telephone line network, ADSL line, and the analog line herein are the lines consisting of the existing twisted pair wires formed by copper wires. The store side station herein means a telephone station that operates the communication service in the area of the store side, and the administrator side station herein means a telephone station that operates the communication service in the area of the administrator side. It is the same for the owner home side station. Therefore, sometimes the store side station and the administrator side station are the same, depending on location. It is the same as the case of connecting to multiple stores.

As shown in Fig.2, the coin laundry concentrated control section 3 mainly consists of a data controller 5, various control devices 6, and multiple coin laundry devices 4 which are connected to the control device 6. When the data controller 5 with a modem function receives a data transmission request signal from the central control device 16, the data controller 5 sends the request for transmission of the data of the coin laundry device 4 which is stored in the control device 6, and sends the data of the coin laundry device 4, which is sent from the control device 6, to the central control section 16. The coin laundry device 4 is provided with a certain number of sensors such as a coin sensor 9 which detects the amount of money inserted into each coin laundry device, a rotation number sensor 10 which detects the number of rotations of the coin laundry device, and a temperature sensor 11 which detects the temperature of the inside of the coin laundry device. The data of the coin laundry device 4 which is detected by the sensors are sent to a micro computer 7 which is installed in the control device 6, and the micro computer 7 stores the data in a semiconductor memory device 8 which is installed in the control device 6. The data controller 5 normally receives the data transmission request signal from the central control device 16 at a certain time cycle, and sends the data transmission request to the control device 6. The control device 6 which receives this signal sends the data of the coin laundry device 4, which is stored in the semiconductor memory device 8, to the data controller 5. The data controller 5 sends the data, which is received from the control device 6, to the central control device 16.

In the case that the data controller 5 receives the data transmission request signal from the central control device 16 unrelated to the time cycle set aforetime, the data controller 5 sends the data transmission request to the control device 6 prior to the data transmission request signal at a certain time cycle mentioned above. The control device 6 which receives this signal sends the data of the coin laundry device 4, which is stored in the semiconductor memory device 8, to the data controller 5. The data controller 5 sends the data of the coin laundry device 4, which is received from the control device 6, to the central control device 16.

This semiconductor memory device 8 mainly consists of a memory, which can perform both data reading and writing, and may be built into the micro computer 8. The semiconductor memory device may also be replaced by a hard disk drive (a magnetic disk drive). The data controller 5 and the control device 6 are replaced by a device that constitutes both functions in one module.

The control device 6 controls the operation of the coin laundry device 4 based on the conditions which a coin laundry customer sets, the coin laundry device operation program which is built in aforetime to respond to those conditions, and the signals from various sensors such as sensor 9,10 and 11 which are set on the coin laundry device. In the case that the control device 6 receives the signal indicating a problem from any of the sensors mentioned above, the control device 6 stops the operation of the coin laundry device 4 and sends the call request signal to the central control device 16 via the data controller 5 as well as storing the signal indicating the problem in the semiconductor memory device 8. When the central control device 16 receives this call request signal, it sends the data transmission request signal to the control device 6 via the data controller 5. When the control device 6 receives the data transmission request, it sends the data based on the signal indicating the problem to the central control device 16. This data is converted to an error code which is set in response to the contents of the errors. The monitor of the central control device 16 displays the contents of the problem responding to the contents of the data (error code) of the signal indicating the problem that is received. The administrator side 15 evaluates the contents displayed on the monitor, decides how to respond, and, for example, sends a control signal for solving the problems, such as a reset signal for the coin laundry device 4, from the central control device 16 to the control device 6 via the data controller 5. As will hereinafter be described, it makes it possible to respond to problems rapidly and appropriately by monitoring near real time images of the coin laundry device 4 simultaneously, which are taken by the network camera 12. This also makes it possible to cut down on costs because it eliminates the need for sending staff from the administrator side to the store 2 so that it is possible to operate unmanned stores. In addition, only the main part of the composition of the coin laundry concentrated control section 3, which is existing technique, are described.

On the other hand, as shown in Fig.1, the communication network between a network camera 12 and a central control device 16 consists of a network camera 12 set at a store side 2, a central control device 16 with a monitor set at the administrator side 15, and an ISP (Internet service provider) server 26, all of which are connected to the Internet 27. A network camera 12 at a store side 2 is connected to a router 13 with an ADSL modem and the router 13 is connected to a splitter 14. The splitter 14 and the store side station 22 are constantly connected via the ADSL line 24 by which the data from the coin laundry device 4 and the moving image data from the network camera 12 can be sent at the same time in between the splitter 14 and the store side station 22.

The central control device 16 and the router 17 with an ADSL modem, which is connected to the ISP (Internet service provider) server 26 via a coaxial cable 25, are set at the administrator side 15. This ISP server 26 and the store side station 22 are connected via the Internet 27. A terminal device 20 at the owner's home 19, when pursuing coin laundry management business outsourcing, is connected to the Internet 27 via the splitter 21 with an internal ADSL modem set at the owner's home, constantly connected ADSL line 31 and the owner's home side station 35. The moving image data of the inside and outside of the store 2 that is taken by the network camera 12 at the store 2 is constantly uploaded onto the website, which is constructed on an ISP (Internet service provider) server 26 via the Internet 27, as near real time moving images, and stored (recorded) on the hard disk drive (magnetic disk drive) which is provided on this server 26. The moving image data is stored in the server 26 as digital data, from which necessary data is selected and restored as a still image which is able to be replayed on the website at a certain interval of time so that the website audience can browse the moving or still images selectively. In addition, the hard disk drive may be replaced by DVD (Digital Versatile Disk) or a magnetic tape device. The server 26 may be set at the administrator side 15, and the server 26 may be constructed with the central control device 16 integrally. Moreover, the terminal device 20 at the owner's home 19 may be connected to the Internet 27 via a fiber-optic network.

As a result of the composition mentioned above, as shown in Fig.6, the images (the moving images) of the inside and outside of the stores, such as store 2, 2a, 2b, 2c and 2d, can be browsed on the website as the moving images in near real time on the monitor of the central control device 16 at the administrator side 15 and the terminal 20 at the owner's home 19 via the Internet 27. It, of course, can perform the same function by connecting the fixed terminal device 33 of the Internet users and the mobile terminal device 29 for mobile phones and mobile devices to the Internet 27 through wire or wireless connection. This effect can also be achieved in the second embodiment and the third embodiment described hereinafter as well.

Thus, the technique which makes it possible to view images of the inside and outside of the coin laundry store 2 in near real time from a remote location could not be achieved by the conventional technical level. It is possible to reduce the cost for facilities by using the ADSL line 24 consisting of twisted pair wire not the leased line for the connection between the store 2 and the store side station 22. As shown in Fig.6, it makes it possible to browse the images of a number of stores on the website simultaneously by using ADSL line 24, 24a, 24b, 24,c, 24d and the Internet 27 so that it makes response to the complaints by the administrator side rapid, and it is also very convenient for the coin laundry customers to be able to check the status of use of the coin laundry device 4 from a terminal device which is capable of connecting to the Internet 27 from inside and outside of their home.

The network camera 12 has the zoom, pan, and tilt functions, which are separately controlled, by the central control device 16 set at the administrator side 15, using a global IP address or a domain name which is given to each camera of the network camera 12, and the condition of the coin laundry device 4 can be checked accurately on the monitor of the central control device 16 at the administrator side 15. It is also possible to check not only the coin laundry device 4 but also the inside and outside of the store 2. Consequently, in responding to complaints from the coin laundry customers, it is possible not only to ascertain the condition of the coin laundry device 4 accurately and respond rapidly and appropriately, but also to check for dishonest acts inside of the store 2 and to ascertain the parking condition of the outside of the store 2. Furthermore, the images taken by this network camera 12 are displayed on the monitor (not shown) connected to a LAN in the store 2, increasing the effective prevention of dishonest acts. It can be expected to have a great effect on the prevention of dishonest acts, especially during money collection and cleaning. Thus, it is possible to ensure the security of the store, which makes it possible to outsource the coin laundry management business. A DNS server for comparing the global IP address and the domain names is not shown here. In this embodiment, one network camera 12, as shown in Fig.1, is set at each store, however, several network cameras may also be set at each store.

In the first embodiment, an example of use via an ADSL line is described, however, other DSL lines such as an HDSL line and an SDSL line may also be used. In the case of other line use, including an ADSL line, the condition of being able to set the speed of forwarding to a speed fast enough to enable the forwarding of moving images in near real time is necessary.

### 2. SECOND ENBODIMENT

The second embodiment of the coin laundry management system on the present invention will be described. The second embodiment of the coin laundry management system on the present invention performs remote management of a coin laundry device and a network camera by connecting a network camera set at a store and a central control device set at an administrator side constantly to the Internet via an ADSL line, and connecting a coin laundry concentrated control section and a central control device set at an administrator side to the Internet via the ADSL line. As shown in Fig.3, in the coin laundry management system 100 on the present invention, a coin laundry concentrated control section 103 set at a store 102 is connected to a router 13 with an ADSL modem. This router 13 and a store side station 22 are constantly connected via an ADSL line 24, and the router 13 and the store side station 22 can send the data of the coin laundry device 4 and the moving image data of the network camera 12 at the same time. The store side station 22 is constantly connected to the administrator side station 23 via the Internet 27. The central control device 16 at the administrator side 115 and the administrator side station 23 are constantly connected via ADSL line 124 through a router 17 with an ADSL modem.

The main composition of the coin laundry concentrated control section 103 in the second embodiment will be described using Fig.2 as it is similar to the first embodiment. As shown in Fig.2, the second embodiment consists of a data controller 105, several control devices 6, and several coin laundry devices 4 which are connected to these control devices 6. The data controller 105 sends the data transmission request of the coin laundry device 4, which is stored in the control device 6, and sends the data of the coin laundry device 4 received from the control device 6 to the central control device 16 after receiving the data transmission request signal from a central control device 16. The coin laundry device 4 is provided with various sensors such as a coin sensor 9 which detects the amount of money inserted into each coin laundry device, a rotation number sensor 10 which detects the number of the rotations of the coin laundry device, and a temperature sensor 11 which detects the temperature of the inside of the coin laundry device. The data of the coin laundry device 4 detected by these sensors are sent to a microcomputer 7 which is installed in the control device 6, and the microcomputer 7 stores the data in a semiconductor memory device 8 which is installed in the control device 6. The data controller 105 normally receives the data transmission request signal from the central control device 16 at a certain time cycle, and sends the data transmission request to the control device 6. The control device 6 which receives the signal sends the data of the coin laundry device 4 which is stored in the semiconductor memory device 8 to the data controller 105. The data controller 105 sends the data received from the control device 6 to the central control device 16.

Although the data controller 5 has a built-in modem function because of the use of the public telephone network 28 in the first embodiment, a data controller 105 doesn't need a modem function because it is connected to a router 13 with an ADSL modem and the communication between the data controller 105 and the router 13 is performed by a digital signal in the second embodiment. In the second and third embodiments, the modem function built into the central control device 16 is not used because the central control device 16 and the analog line 30 are not connected.

In the case that the data controller 105 receives the data transmission request signal from the central control device 16 unrelated to the time cycle set aforetime, the data controller 105 sends the data transmission request to the control device 6 in prior to the data transmission request signal at a certain time cycle mentioned above. The control device 6 which receives this signal sends the data from the coin laundry device 4, which is stored in the semiconductor memory device 8, to the data controller 105. The data controller 105 sends the data of the coin laundry device 4, which is received from the control device 6, to the central control device 16.

This semiconductor memory device 8 mainly consists of a memory, which can perform both data reading and writing, and may be built into the microcomputer 8. The semiconductor memory device 8 may also be replaced by a hard disk drive (a magnetic disk drive). The data controller 105 and the control device 6 are also replaced by a device that constitutes both functions in one module.

The control device 6 controls the operation of the coin laundry device 4 based on the conditions which a coin laundry customer sets, the coin laundry device operation program which is built in aforetime to respond to those conditions, and the signals from various sensors such as sensor 9,10 and 11 which are set on the coin laundry device. In the case that the control device 6 receives a signal indicating a problem from any of the sensors mentioned above, the control device 6 stops the operation of the coin laundry device 4 and sends the call request signal to the central control device 16 via the data controller 105 as well as storing the signal indicating the problem in the semiconductor memory device 8. When the central control device 16 receives this call request signal, it sends the data transmission request signal to the control device 6 via the data controller 105. When the control device 6 receives the data transmission request, it sends the data based on the signal indicating the problem to the central control device 16. This data is converted to an error code which is set in response to the contents of the error. The monitor of the central control device 16 displays the contents of the problem responding to the contents of the data (error code) of the signal indicating the problem that is received. The administrator side 115 ascertains the contents displayed on the monitor, decides how to respond, and, for example, sends a control signal for solving the problem, such as a reset signal for the coin laundry device 4 from the central control device 16 to the control device 6 via the data controller 105. As will hereinafter be described, it makes it possible to respond to problems rapidly and appropriately by monitoring near real time images of the coin laundry device 4 simultaneously, which are taken by the network camera 12. This also makes it possible to cut down on costs because there is no need for sending staff from the administrator side to the store 102 so that it is possible to have unmanned stores. In addition, only the main part of the composition of the coin laundry concentrated control section 103, which is existing technique, is described.

The communication network between a network camera 12 and a central control device 16 consists of a network camera 12 set at a store side 102, a central control device 16 with a monitor set at the administrator side 115, and an ISP (internet service provider) server 26, all of which are connected to the Internet 27. A network camera at a store side 102 is connected to a router 13 with an ADSL modem, and the router 13 and the store side station 22 are constantly connected, as is mentioned above, via the ADSL line 24 by which the data of the coin laundry device 4 and the moving image data of the network camera 12 can be sent at the same time in between the router 13 and the store side station 22.

The central control device 16 and the router 17 with an ADSL modem which is connected with the central control device 16 are set at the administrator side 115, and the router 17 is constantly connected with the administrator side 23 via the ADSL line 124. ISP server 26 is connected to the Internet 27 via a prescribed communication line. In this way, the network camera 12 set at a store side 102, a server 26 and the central control device 16 are constantly connected to the Internet 27 via the ADSL line 24 and 124. A terminal device 20 at the owner home side 19, when pursuing coin laundry management business outsourcing, and the Internet 27 are connected via the splitter 21 with an internal ADSL modem set at the owner home side, constantly connected ADSL line 31 and the owner home side station 35. The moving image data of the inside and outside of the store 102 taken by the network camera 12 at the store 102 is constantly uploaded onto the website, which is constructed on an ISP (internet service provider) server 26 via the Internet 27, as near real time moving images, and stored (recorded) in the hard disk drive (magnetic disk drive) which is provided on this server. The moving image data is stored in the server 26 as digital data, from which necessary data is selected and restored as still images, which are able to be replayed on the website at a certain interval of time so that the website audience can browse the moving images or the still images selectively. In addition, the hard disk drive may be replaced by DVD (Digital Versatile Disk) or a magnetic tape device. The server 26 may be set at the administrator side 115 and the server 26 may be constructed with the central control device 16 integrally. Moreover, the terminal device 20 at the owner home side 19 may be connected to the Internet 27 via a fiber-optic network.

In the second embodiment as well as in the first embodiment, it is made possible to browse the images of multiple stores on the website simultaneously by using an ADSL line 24 and the Internet 27 so that it makes it possible for the administrator side to respond to complaints rapidly, and it is also very convenient for the coin laundry customers to be able to check the status of use of the coin laundry device 4 from the terminal device which is capable of connecting the Internet 27 from inside and outside of their homes.

The network camera 12 has zoom, pan, and tilt functions which are separately controlled by the central control device 16 set at the administrator side 115, using a global IP address or a domain name which is assigned to each camera of the network camera 12, and the condition of the coin laundry device 4 can be checked accurately on the monitor of the central control device 16 at the administrator side 115. It is also possible to check not only the coin laundry device 4 but also the inside and outside of the store 102. Consequently, in responding to the complaints of the coin laundry customers, it is possible not only to ascertain the condition of the coin laundry device 4 accurately and respond to problems rapidly and appropriately but it is also possible to check for dishonest acts inside of the store 102 and to ascertain the parking condition of the outside of the store 102. Furthermore, the images taken by this network camera 12 are displayed on a monitor (not shown) connected to LAN in the store 102, and that increases the effective prevention of dishonest acts. It can be expected to have a great effect on the prevention of dishonest acts especially during money collection money and cleaning. Thus, it is possible to ensure the security of the store, and this makes it possible to outsource the coin laundry management business. A DNS server for comparing the global IP address and the domain names is not shown here. In this embodiment, one network camera 12, as shown in Fig.3, is set at each store; however, several network cameras may also be set at each store.

A coin laundry management system 100 of the present invention makes it possible to view the condition of the inside and outside of the store 102 in near real time from a remote location so that it is also possible, for example, to set a call center which only manages the response to complaints, as shown in the first embodiment, at a different place from the administrator side 115. If a control device that has the same function as the central control device 16 is provided at the call center using an ADSL line 24, 124 and the Internet 27 as well, the images of the stores viewed at the call center and the administrator side are near synchronized and near real time so that it makes it possible for the call center to respond to complaints rapidly and appropriately as is also the case of the administrator side 115 mentioned above. Consequently, it becomes possible to separate the management of complaint response from the coin laundry management business and outsource it.

Thus, the second embodiment is characterized by connecting the coin laundry concentrated control section 3 and the central control device 16 in the first embodiment constantly via the Internet 27 instead of the public telephone line network 28.

### 3. THIRD EMBODIMENT

The third embodiment of the coin laundry management system of the present invention will be described. The third embodiment of the coin laundry management system of the present invention performs remote management of a coin laundry device and a network camera by connecting a network camera set at a store and a central control device set at an administrator side constantly to the Internet via a fiber-optic network, and connecting a coin laundry concentrated control section set at a store and a central control device set at an administrator side to the Internet via the fiber-optic network. As shown in Fig.4, in the coin laundry management system 200 of the present invention, a coin laundry concentrated control section 203 set at a store 202 is connected to a broadband router 213, which is connected to a network termination unit 214 with an internal optic modem. The network termination unit 214 is constantly connected to the Internet 27 not via a telephone station but via a fiber-optic network 220. The network camera 12, which is also connected to the broadband router 213, can send the data of the coin laundry device 4 and the moving image data of the network camera 12 at the same time via the fiber-optic network 220. The central control device 16 at the administrator side 215 is constantly connected to the Internet 27 via the fiber-optic network as well as the store side 202.

The main composition of the coin laundry concentrated control section 203 in the third embodiment will be described using Fig.2 as it is similar to the first embodiment and the second embodiment. As shown in Fig.2, the third embodiment consists of a data controller 205, several control devices 6, and several coin laundry devices 4 which are connected to these control devices 6. The data controller 205 sends the data transmission request of the coin laundry device 4, which is stored in the control device 6, and sends the data of the coin laundry device 4 received from the control device 6 to the central control device 16 after receiving the data transmission request signal from a central control device 16. The coin laundry device 4 is provided with various sensors such as a coin sensor 9 which detects the amount of money inserted into each coin laundry device, a rotation number sensor 10 which detects the number of the rotations of the coin laundry device, and a temperature sensor 11 which detects the temperature of the inside of the coin laundry device. The data of the coin laundry device 4 detected by these sensors are sent to a microcomputer 7 which is installed in the control device 6, and the microcomputer 7 stores the data in a semiconductor memory device 8 which is installed in the control device 6. The data controller 205 normally receives the data transmission request signal from the central control device 16 at a certain time cycle, and sends the data transmission request to the control device 6. The control device 6 which receives the signal sends the data of the coin laundry device 4 which is stored in the semiconductor memory device 8 to the data controller 5. The data controller 105 sends the data received from the control device 6 to the central control device 16. Although the coin laundry concentrated control section 103 is constantly connected to the Internet 27 via an ADSL line 24 in the second embodiment, the coin laundry concentrated control section 203 in the third embodiment is constantly connected to the Internet 27 via a fiber-optic network 220. For that reason, the broadband router 213 and the network termination unit 214 with an internal optic modem are connected in between the concentrated control section 203 and the fiber-optic network 220.

In the case that the data controller 205 receives the data transmission request signal from the central control device 16 unrelated to the time cycle set aforetime, the data controller 205 sends the data transmission request to the control device 6 in prior to the data transmission request signal at a certain time cycle mentioned above. The control device 6 which receives this signal sends the data of the coin laundry device 4, which is stored in the semiconductor memory device 8, to the data controller 205. The data controller 205 sends the data of the coin laundry device 4, which is received from the control device 6, to the central control device 16.

This semiconductor memory device 8 mainly consists of a memory, which can perform both data reading and writing, and may be built into the micro computer 8. The semiconductor memory device may also be replaced by a hard disk drive (a magnetic disk drive). The data controller 205 and the control device 6 are also replaced by a device that constitutes both functions in one module.

The control device 6 controls the operation of the coin laundry device 4 based on the conditions which a coin laundry customer sets, the coin laundry device operation program which is built in aforetime to respond to those conditions, and the signals from various sensors such as sensors 9,10 and 11 which are set on the coin laundry device. In the case that the control device 6 receives the signal indicating a problem from any of the sensors mentioned above, the control device 6 stops the operation of the coin laundry device 4 and sends the call request signal to the central control device 16 via the data controller 205 as well as storing the signal indicating the problem in the semiconductor memory device 8. When the central control device 16 receives this call request signal, it sends the data transmission request signal to the control device 6 via the data controller 205. When the control device 6 receives the data transmission request, it sends the data based on the signal indicating the problem to the central control device 16. This data is converted to an error code which is set in response to the contents of the errors. The monitor of the central control device 16 displays the contents of the problem responding to the contents of the data (error code) of the signal indicating the problem that is received. The administrator side 215 ascertains the contents displayed on the monitor, decides how to respond, and, for example, sends a control signal for solving the problem, such as a reset signal for the coin laundry device 4, from the central control device 16 to the control device 6 via the data controller 5. As will hereinafter be described, it makes it possible to respond to problems rapidly and appropriately by monitoring the near real time images of the coin laundry device 4 simultaneously, which are taken by the network camera 12. That also makes it possible to cut down on cost because there is no need to send staff from the administrator side to the store 202. This also makes it possible to have unmanned stores. In addition, only the main part of the composition of the coin laundry concentrated control section 203, which is existing technique, are described.

The communication network between a network camera 12 and a central control device 16 consists of a network camera 12 set at a store side 202, a central control device 16 with a monitor set at the administrator side 115, and an ISP (internet service provider) server 26, all of which are connected to the Internet 27. A network camera 12 at a store side 202 is connected to broadband router 213, which is connected to the network termination unit 214 with an internal optic modem. The network termination unit 214 and the Internet 27 are constantly connected via the fiber-optic network 220.

The central control device 16, the broadband router 217 connected with the central control device 16, and the network termination unit 218 with an internal optic modem which is connected to the broadband router 217 are set at the administrator side 215. The network termination unit 218 is constantly connected to the Internet 27 via the fiber-optic network 221. The ISP server 26 is connected to the Internet 27 via a prescribed communication line. In this way, the network camera 12 set at a store side 202, a server 26 and the central control device 16 are constantly connected to the Internet 27 via the fiber-optic network 220 and 221. A terminal device 20 at the owner home side 19, when pursuing coin laundry management business outsourcing, and the Internet 27 are connected via the splitter 21 with an internal ADSL modem set at the owner home side, the ADSL line 31 and the owner home side station 35. The moving image data of the inside and outside of the store 202 taken by the network camera 12 at the store 2 is constantly put on the website, which is constructed on an ISP (internet service provider) server 26 via the Internet 27, as near real time moving images, and stored (recorded) in the hard disk drive (magnetic disk drive) which is provided on this server. The moving image data is stored in the server 26 as digital data, from which necessary data is selected and restored as a still image, which is able to be replayed on the website at a certain interval of time so that the website audience can browse the moving images or the still images selectively. In addition, the hard disk drive may be replaced by a DVD (Digital Versatile Disk) or a magnetic tape device. The server 26 may be set at the administrator side 215 and the server 26 may be constructed with the central control device 16 integrally. Moreover, the terminal device 20 at the owner home side 19 may be connected to the Internet 27 via a fiber-optic network 220 and 221.

In the third embodiment as well as in the first embodiment and the second embodiment, it is made possible to browse the images of multiple stores on the website simultaneously by using the Internet 27 so that it makes it possible for the administrator side to respond to complaints rapidly and it is also very convenient for the coin laundry customers to be able to check the status of use of the coin laundry device 4 from the terminal device which is capable of connecting to the Internet 27 from inside and outside of their homes.

The network camera 12 has zoom, pan, and tilt functions, which are separately controlled by the central control device 16 set at the administrator side 215, using the global IP address or a domain name which are given to each camera of the network camera 12, and the condition of the coin laundry device 4 can be checked accurately on the monitor of the central control device 16 at the administrator side 215. It is also possible to check not only the coin laundry device 4 but also the inside and outside of the store 202. Consequently, in responding to the complaints of coin laundry customers, it is possible not only to ascertain the condition of the coin laundry device 4 accurately and respond to problems rapidly and appropriately but also to check dishonest acts inside of the store 202 and to ascertain the parking condition of the outside of the store 202. Furthermore, the images taken by this network camera 12 are displayed on the monitor (not shown) connected to a LAN in the store 202, and that increases the effective prevention of dishonest acts. It can be expected to have a great effect on the prevention of dishonest acts, especially during money collection and cleaning. Thus, it is possible to ensure the security of the store, and this makes it possible to outsource the coin laundry management business. The DNS server for comparing the global IP address and the domain names is not shown here. In this embodiment, one network camera 12, as shown in Fig.3, is set at each store; however, several network cameras may also be set at each store.

A coin laundry management system 200 of the present invention makes it possible to view the condition of the inside and outside of the store 202 in near real time from location remote from the store 202 so that it is also possible, for example, to set a call center which only manages complaint response, as shown in the first embodiment, at a different place from the administrator side 215. If a control device that has the same function as the central control device 16 is provided at the call center using a fiber-optic network 220, 221 and the Internet 27 as well, the images of the stores viewed at the call center and the administrator side are near synchronized and near real time so that it makes possible for the call center to respond to complaints rapidly and appropriately, as is also the case of the administrator side 215 mentioned above. Consequently, it becomes possible to separate the management of complaint response from the coin laundry management business and outsource it.

Thus, the third embodiment is characterized by connecting the coin laundry concentrated control section 3 and the central control device 16 in the first embodiment constantly via the Internet 27 instead of the public telephone line network 28, and via a fiber-optic network 220 and 221 instead of an ADSL line 24 and a coaxial cable 25.

An example of the response to problems when a problem arises in the coin laundry management system 1 of the present invention will be described. This description can be applied to the first embodiment, the second embodiment and the third embodiment. As shown in Fig.6, when a problem arises in the coin laundry device 4 (Step S01), as it is described above, the sensor that detects the problem sends a signal indicating the problem to the control device 16 and it stops the operation of the coin laundry device 4 (Step S02). This signal indicating the problem is stored in the semiconductor memory device 8 which is installed in the control device 6, and sends the call request signal for the data transmission request signal to the central control device 16 via the data controller 5 (105 and 205). The central control device 16 which receives this call request signal sends the data transmission request signal to the data controller 5 (105 and 205), which requires the relevant control device 6 to transmit the data. This control device 6 sends the signal of the problem which is stored in the semiconductor memory device 8 to the data controller 5 (105 and 205), which sends the signal to the central control device 16. The data of the signal indicating the problem, as mentioned above, is converted to an error code which is set in response to the contents of the error. When the monitor of the central control device 16 which receives the signal indicating the problem (error code), displays the contents of the problem responding to the error code of the signal of the problem (Step S03), the administrator operates the network camera 12 from the central control device 16, then takes enlarged moving images with the zoom lens of the relevant coin laundry device 4, then displays the mode lamp that is indicated on the coin laundry device 4 and the condition of the coin laundry device 4 through its central observation window on the monitor, then views the image of the coin laundry device 4 and ascertain the contents of the problem (Step S04). After deciding upon an appropriate solution to the problem, the control signal for the solution (ex. a reset signal for the coin laundry device) is sent from the central control device 16 to the data controller 5 (105 and 205), which sends a control signal to the control device 6 of the relevant coin laundry device 4, and the solution for the problem is performed on the coin laundry device 4 (Step S05). Then, the condition and the moving image of the coin laundry device 4 are displayed on the monitor of the central control device 16, and ascertained (Step S06) to see if there are any problems (Step S07). If there is a problem, the solution for the problem is performed ascertaining the condition of the coin laundry device 4 by the network camera 12 again. After repeating this process (Steps S04 through S07) and the problem is solved, the process for the solution is completed (Step S08). Since, practically, the effect of using the network camera is significant, there is no need to repeat Steps S04 through S07. Consequently, it is possible to respond to problems by ascertaining the signal of the problems and the condition of the coin laundry device 4 in near real time so that a rapid and appropriate response to problems can be achieved without sending staff to the stores. This process of the solution to problems can be achieved without any means of goes without saying that it can be achieved by the coin laundry customer calling to the administrator side 15 (115 and 215) with a mobile phone.
The present invention is constructed as above and its use provides the following excellent effects.

The coin laundry system of the present invention uses the constantly connected line to send the data of the moving images taken by the network camera and to send the coin laundry device data, so that it is possible to operate it for 24 hours per day. As described above, the network camera has the zoom, pan and tilt functions and the inside and outside of the stores can be recorded in detail or extensively, so that it is possible to ensure the security of the stores. Consequently, it reduces the owner cost by making it possible to outsource the business of money collection and store cleaning. This makes it possible to establish this system via the Internet and provide the coin laundry devices which have standardized usage over a vast area. That also reduces the cost of system installation and maintenance, and makes it easy for customers to use them. It also makes it possible to respond to problems with the coin laundry devices rapidly and appropriately, and ascertain the security of the stores.

## Claims

1. A coin laundry management system comprising:
a coin laundry device;
a control device that controls the operation of the coin laundry device based on the coin laundry device data received from various sensors;
a data controller that sends the data from the control device;
a network camera that converts still images to moving image data and sends it;
a coin laundry store where the coin laundry device, the data controller and the network camera are provided;
a central control device that is connected to the data controller and the network camera via a line of communication; and
the coin laundry device controlled remotely based on coin laundry device data and the moving images of the coin laundry store that are sent to the central control device from the data controller and the network camera via a line of communication.

2. A coin laundry management system comprising:
a coin laundry concentrated control section which is provided with a coin laundry device, a control device that controls the operation of the coin laundry device based on the coin laundry device data loaded from various sensors and also stores the loaded data, and a data controller that sends the data from the control device;
a network camera with zoom, pan and tilt functions that can convert still images of the inside of the store to moving images and send them;
a coin laundry store which is provided with the coin laundry concentrated control section and the network camera;
a central control device, which is set at the administrator side and has a monitor, connected to the coin laundry concentrated control section and the network camera via a line of communication;
the coin laundry concentrated control section and the central control device connected via the public telephone line network with an xDSL line;
a monitor of the central control device displaying the condition of a coin laundry device based on the contents of the coin laundry device data which are sent to the central control device;
the network camera and the central control device constantly connected to the Internet via an xDSL line;
the administrator side operating the network camera by the central control device and taking images and converting them to moving image data and sending them to the homepage server of the administrator side which is constantly connected to the Internet; and
wherein the moving images are uploaded onto the homepage in near real time and displayed on the monitor of the central control device which is constantly connected to the Internet, allowing the administrator side to operate the coin laundry device remotely based on these near real time moving images of the inside of the store and the condition of the coin laundry device that is displayed on the monitor of the central control device.

3. A coin laundry management system comprising:
a coin laundry concentrated control section which is provided with a coin laundry device, a control device that controls the operation of the coin laundry device based on the coin laundry device data loaded from various sensors and also stores the loaded data, and a data controller that sends the data from the control device;
a network camera that can convert the images taken to moving images and send them;
a coin laundry store which is provided with the coin laundry concentrated control section and the network camera;
a central control device with a monitor set at the administrator side;
the central control device, the coin laundry concentrated control section and the network camera constantly connected to the Internet via a prescribed line of communication; a monitor of the central control device displaying the condition of a coin laundry device based on the contents of the coin laundry device data which is sent to the central control device;
the administrator side operating the network camera by the central control device and taking images and converting them to moving image data and sending the data to the homepage server of the administrator side which is constantly connected to the Internet; and
wherein the moving images are uploaded onto the homepage in near real time and displayed on the monitor of the central control device which is constantly connected to the Internet, allowing the administrator side to operate the coin laundry device remotely based on these near real time moving images of the inside of the store and
the condition of the coin laundry device that is displayed on the monitor of the central control device.

4. The coin laundry management system as claimed in from claim 1 to claim 3, wherein it is made possible to upload the images that are taken by a network camera as still images onto the homepage and view these still images and the moving images selectively on the homepage.

5. The coin laundry management system as claimed in from claim 1 to claim 3, wherein the images taken by a network camera are recorded by a recording device and the replayed images of these recorded images are uploaded onto the homepage.
